# EUROPEAN PATENT APPLICATION

(11) **EP 4 362 557 A1**
(43) Date of publication of application: **01.05.2024**
(21) Application number: 21946551.5
(22) Date of filing: 25.06.2021
(51) Int. Cl.: H04W 48/12, H04W 36/00

(54) **POLARIZATION INDICATION METHOD AND APPARATUS, POLARIZATION DETERMINATION METHOD AND APPARATUS, COMMUNICATION APPARATUS, AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: dompatent von Kreisler Selting Werner - Partnerschaft von Patent- und Rechtsanwälten mbB
(86) International application number: PCT/CN2021/102546
(87) International publication number: WO 2022/267061

(57) **Abstract**

The present disclosure relates to a polarization indication method and apparatus, a polarization determination method and apparatus, a communications apparatus, and a storage medium. The polarization indication method comprises: sending first indication information to a terminal, wherein the first indication information is used for indicating a target polarization mode used by communication between the terminal and a satellite in a non-terrestrial network. According to the present disclosure, after determining the target polarization mode, the base station may generate the first indication information indicative of the target polarization mode, and send the first indication information to the terminal, so that the terminal determines, according to the first indication information, the target polarization mode used by the communication with the satellite in the non-terrestrial network and thus communicates with the satellite by using the target polarization mode; when the terminal is prevented from communicating with the satellite, the polarization mode adopted by the terminal is different from a polarization mode adopted by the satellite, and good communication is ensured between the terminal and the satellite.

## Description

### TECHNICAL FIELD

The present disclosure relates to the field of communication technology, and more particularly to a polarization indicating method, a polarization determining method, a polarization indicating apparatus, a polarization determining apparatus, a communication apparatus, and a computer-readable storage medium.

### BACKGROUND

In a terrestrial network, a polarization mode for a communication between a terminal and a base station is generally a fixed linear polarization mode. However, in a non-terrestrial network (NTN), the terminal needs to communicate via a satellite.

Since the satellite operates in the sky far away from the ground, a signal communicated between the satellite and the terminal needs to pass through an ionosphere and a mist layer, so it will be affected by the ionosphere and the mist layer. When passing through the ionosphere, the signal in the linear polarization mode will suffer from electromagnetic interference, causing a polarization direction to deviate, or it will be affected by the mist layer, resulting in bit errors. Due to these factors, the satellite generally adopts a circular polarization mode for communication.

Since the terminal generally adopts a linear polarization mode for communication, while the satellite generally adopts the circular polarization for communication, this leads to inconsistent polarization modes between the terminal and the satellite, which affects the communication quality between the terminal and the satellite, and even leads to that the satellite and the terminal cannot communicate with each other.

### SUMMARY

In view of the above, embodiments of the present disclosure provide a polarization indicating method, a polarization determining method, a polarization indicating apparatus, a polarization determining apparatus, a communication apparatus, and a computer-readable storage medium, to solve the technical problems in the related art.

According to a first aspect of embodiments of the present disclosure, there is provided a polarization indicating method, which is performed by a base station, and includes: sending first indication information to a terminal. The first indication information is configured to indicate a target polarization mode for the terminal to communicate with a satellite in a non-terrestrial network.

According to a second aspect of embodiments of the present disclosure, there is provided a polarization determining method, which is performed by a terminal, and includes: determining a target polarization mode for communication with a base station according to first indication information sent by the base station.

According to a third aspect of embodiments of the present disclosure, there is provided a polarization indicating apparatus, which is applicable to a base station, and includes: one or more processors configured to send first indication information to a terminal. The first indication information is configured to indicate a target polarization mode for the terminal to communicate with a satellite in a non-terrestrial network.

According to a fourth aspect of embodiments of the present disclosure, there is provided a polarization determining apparatus, which is applicable to a terminal, and includes: one or more processors configured to determine a target polarization mode for communication with a base station according to first indication information sent by the base station.

According to a fifth aspect of embodiments of the present disclosure, there is provided a communication apparatus, which includes: a processor; and a memory for storing an instruction executable by the processor. The processor is configured to perform the polarization indicating method as described above.

According to a sixth aspect of embodiments of the present disclosure, there is provided a communication apparatus, which includes: a processor; and a memory for storing an instruction executable by the processor. The processor is configured to perform the polarization determining method as described above.

According to a seventh aspect of embodiments of the present disclosure, there is provided a computer-readable storage medium having stored therein a computer program that, when executed by a processor, causes steps in the polarization indicating method as described above to be implemented.

According to an eighth aspect of embodiments of the present disclosure, there is provided a computer-readable storage medium having stored therein a computer program that, when executed by a processor, causes steps in the polarization determining method as described above to be implemented.

According to embodiments of the present disclosure, after determining the target polarization mode, the base station may generate the first indication information for indicating the target polarization mode, and send the first indication information to the terminal, so that the terminal is able to determine the target polarization mode for communication with the satellite in non-terrestrial network according to the first indication information, and use the target polarization mode to communicate with the satellite, thereby avoiding that the polarization mode used by the terminal in communication with the satellite is different from that used by the satellite, and ensuring good communication between the terminal and the satellite.

### BRIEF DESCRIPTION OF THE DRAWINGS

In order to clearly illustrate technical solutions in embodiments of the present disclosure, drawings to be used in the description of embodiments of the present disclosure will be briefly introduced below. Apparently, the drawings in the following descriptions only involve some embodiments of the present disclosure, and for those skilled in the art, other drawings can be obtained according to these drawings without creative labors.
FIG. 1 is a schematic flowchart illustrating a polarization indicating method according to embodiments of the present disclosure.
FIG. 2 is a schematic flowchart illustrating another polarization indicating method according to embodiments of the present disclosure.
FIG. 3 is a schematic flowchart illustrating another polarization indicating method according to embodiments of the present disclosure.
FIG. 4 is a schematic flowchart illustrating a polarization determining method according to embodiments of the present disclosure.
FIG. 5 is a schematic flowchart illustrating another polarization determining method according to embodiments of the present disclosure.
FIG. 6 is a schematic block diagram illustrating an apparatus for polarization indication according to embodiments of the present disclosure.
FIG. 7 is a schematic block diagram illustrating an apparatus for polarization determination according to embodiments of the present disclosure.

### DETAILED DESCRIPTION

Technical solutions in embodiments of the present disclosure will be described clearly and thoroughly below with reference to accompanying drawings. Apparently, the embodiments described herein are only some embodiments, rather than all embodiments of the present disclosure. All other embodiments obtained by those skilled in the art based on the embodiments described herein without creative labors shall belong to the protection scope of the present disclosure.

Terms used in embodiments of the present disclosure are only for the purpose of describing specific embodiments, and not intended to limit embodiments of the present disclosure. As used in embodiments of the present disclosure and the appended claims, "a/an" and "the" in a singular form are intended to include plural forms, unless clearly indicated in the context otherwise. It should also be understood that, the term "and/or" used herein represents and includes any one or any possible combinations of one or more associated listed items.

It should be understood that even though terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. Depending on the context, the term "if' as used herein may be construed to mean "when", "upon" or "in response to determining".

For the purposes of brevity and ease of understanding, terms "greater than" or "less than", "higher than" or "lower than" are used herein for indicating size relationships. However, it may be understood for a person skilled in the art that the term "greater than" also covers a meaning of "greater than or equal to", the term "less than" also covers a meaning of "less than or equal to"; the term "higher than" also covers a meaning of "higher than or equal to", and the term "lower than" also covers a meaning of "lower than or equal to".

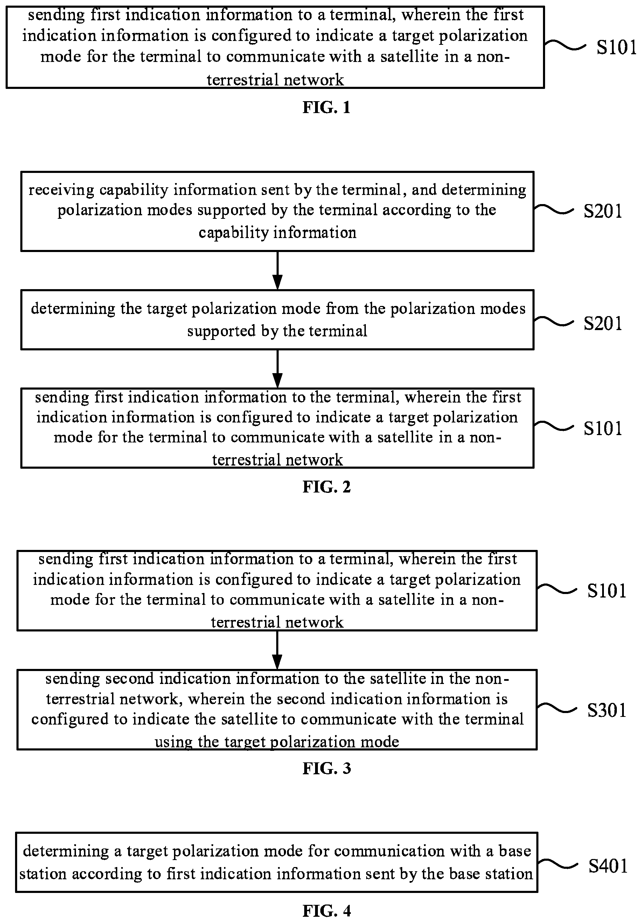

FIG. 1 is a schematic flowchart illustrating a polarization indicating method according to embodiments of the present disclosure. The polarization indicating method shown in embodiments of the present disclosure may be performed by a base station, and the base station is able to communicate with a terminal in a non-terrestrial network, for example via a satellite in the sky. The communication via a satellite includes but is not limited to a transparent transmission, a non-transparent transmission (also called on-board regeneration), and other manners. In the related art, the transparent transmission mode means that the base station and the satellite are two separate devices; and the non-transparent transmission mode means that the satellite can work as the base station, that is, the satellite and the base station are the same electronic device or different circuit boards of the same electronic device. In all embodiments of the present disclosure, it is not limited whether the base station and the satellite are the same device. At the same time, those skilled in the art could understand that when the satellite and the base station are the same device, the satellite and the base station mentioned in embodiments may be the same subject (even if different names are used).

In an embodiment, the terminal includes, but is not limited to, a communication apparatus such as a mobile phone, a tablet computer, a wearable device, a sensor, or an Internet of Things device. The base station includes, but is not limited to, a base station in a communication system, such as a 4G base station, a 5G base station, or a 6G base station. The base station may be a base station in a non-terrestrial network, and the terminal may be a terminal in a non-terrestrial network.

As shown in FIG. 1, the polarization indicating method may include a following step.

In step S 101, first indication information is sent to a terminal, and the first indication information is configured to indicate a target polarization mode for the terminal to communicate with a satellite in a non-terrestrial network.

In an embodiment, before determining the target polarization mode, the terminal may receive a downlink signal sent by the satellite in a certain way, so as to receive the first indication information. For example, the terminal may perform blind detection on the downlink signal sent by the satellite. Alternatively, the satellite uses a circular polarization mode to send the downlink signal, then the terminal can receive the signal even if it uses a linear polarization mode that is commonly used in a land communication system, but the reception effect is slightly poor, and multiple receptions may be needed to obtain the reliable first indication information.

After the terminal determines the target polarization mode, it can communicate with the satellite through the target polarization mode. For example, it is determined according to the first indication information that the target polarization mode is a polarization mode of a downlink communication, then a downlink signal sent by the satellite through the target polarization mode may be received through the target polarization mode. For example, it is determined according to the first indication information that the target polarization mode is a polarization mode of an uplink communication, then an uplink signal may be sent to the satellite through the target polarization mode.

In an embodiment, the target polarization mode indicated by the base station to the terminal may also be a polarization mode used for a communication between the satellite and the terminal. For example, the base station determines a polarization mode used by a communication of the satellite as the target polarization mode. The target polarization mode may be specified in a protocol, or it is independently determined by the satellite and informed to the base station, or it is independently determined by the base station, or it is negotiated by the satellite and the base station.

For example, in a case where the target polarization mode is independently determined by the base station, the base station may determine the target polarization mode according to the influence of the ionosphere and/or the mist layer between the ground and the satellite on signal transmissions, so that the influence of the ionosphere and/or the mist layer on the signal transmissions may be reduced to the greatest extent when the satellite communicates based on the target polarization mode. Alternatively, the base station may also determine the target polarization mode based on antenna polarization modes of terminals in its served cell.

In an embodiment, after determining the target polarization mode, the base station may generate the first indication information for indicating the target polarization mode, and send the first indication information to the terminal, so that the terminal is able to determine the target polarization mode for communication with the satellite in the non-terrestrial network according to the first indication information, and use the target polarization mode to communicate with the satellite, thereby avoiding that the polarization mode used by the terminal for the communication with the satellite is different from that used by the satellite, and ensuring good communication between the terminal and the satellite.

In an embodiment, the first indication information may also carry timeliness information of the target polarization mode, and the timeliness information may be an actual time or a logical time, for example, the start and end include a system frame number, a time slot, a time-domain symbol, etc. The terminal may use the target polarization mode to communicate with the satellite within an effective time period corresponding to the timeliness information; after the effective time period corresponding to the timeliness information, the terminal may receive the first indication information sent by the base station again, or request the base station to send the first indication information again, and communicate with the satellite according to the target polarization mode indicated by the first indication information received again.

In an embodiment, the first indication information may also carry service information of the target polarization mode. The service information may include one or more service types. Alternatively, the service information does not include a specific service type, but indicates, by default, a service currently performed by the terminal. When performing information transmission of the service type corresponding to the service information, the terminal may use the target polarization mode to communicate with the satellite. When performing information transmission of other service types, the terminal may receive the first indication information sent by the base station again, or request the base station to send the first indication information again (information of the other service types may be carried in the request, so that the target polarization mode indicated by the base station corresponds to the other service types), and communicate with the satellite according to the target polarization mode indicated by the first indication information received again.

In an embodiment, the target polarization mode includes at least one of: a linear polarization, a circular polarization, a left-hand circular polarization, or a right-hand circular polarization.

In an embodiment, it is determined that the target polarization mode indicated by the satellite via the first indication information may include an uplink target polarization mode for an uplink transmission and a downlink target polarization mode for a downlink transmission. The uplink target polarization mode may be the same as or different from the downlink target polarization mode. The terminal may use the uplink target polarization mode for the uplink transmission, and use the downlink target polarization mode to receive a downlink signal. For example, the uplink target polarization mode is the left-hand circular polarization, and the downlink target polarization mode is the right-hand circular polarization, so the terminal may use the left-hand circular polarization mode to send information to the satellite, and use the right-hand circular polarization mode to receive information sent by the satellite.

It could be understood that the target polarization mode indicated by the satellite via the first indication information may be determined by the base station or the satellite. When the satellite works as the base station, the satellite and the base station are the same device, and this device determines the target polarization mode indicated by the satellite via the first indication information. The satellite and the base station may be different expressions of the same device, which is applicable to all subsequent embodiments, will not be elaborated later.

In an embodiment, the number of bits occupied by the first indication information is determined based on the number of selectable modes of the target polarization mode.

For example, if the selectable modes of the target polarization mode only include the linear polarization and the circular polarization, the first indication information may occupy 1 bit. For example, when this bit is 1, it indicates that the target polarization mode is the linear polarization, and when this bit is 0, it indicates that the target polarization mode is the circular polarization.

For example, if the selectable modes of the target polarization mode only include the linear polarization, the circular polarization, the left-hand circular polarization and the right-hand circular polarization, the first indication information may occupy 2 bits with for example 11 indicating that the target polarization mode is the linear polarization, 00 indicating that the target polarization mode is the circular polarization, 01 indicating that the target polarization mode is the right-hand circular polarization, and 10 indicating that the target polarization mode is the left-hand circular polarization.

In an embodiment, sending the first indication information to the terminal includes: sending the first indication information to the terminal in an explicit manner and/or an implicit manner.

The base station or the satellite (hereinafter referred to as a network device, that is, the network device may be the base station or the satellite; when the base station and the satellite are the same device, the network device is the device) may send the first indication information to the terminal in an explicit manner, or may send the indication information to the terminal in an implicit manner. The network device may select the manner for sending the first indication information as required, and the network device may select one or both of the manners to send the first indication information.

In an embodiment, sending the first indication information to the terminal in the explicit manner includes: sending downlink control information to the terminal. The first indication information is carried in the downlink control information.

The network device may send the downlink control information (DCI) to the terminal, and carry the first indication information in the downlink control information. In this way, the first indication information does not need to be sent separately, which is conducive to saving communication resources.

In an embodiment, the first indication information is contained in an information field newly added in the downlink control information dedicated to indicating the target polarization mode, or is contained in an existing information field of the downlink control information for indicating other information. The other information is not sent at least during a part of a communication process between the base station and the terminal.

The network device may add an information field in the downlink control information, and the information field is dedicated to indicating the target polarization mode, and the first indication information may be set in this information field.

The network device may also set the first indication information in an existing information field of the downlink control information, and the existing information field is used to indicate other information, but the other information is not sent at least during a part of the communication process between the network device and the terminal. In this way, the influence of setting the first indication information in the existing information field on the other information may be minimized.

For example, the other information may be hybrid automatic repeat request (HARQ) information or transport block (TB) scheduling information. Taking the hybrid automatic repeat request information as an example for illustration, when the network device communicates with the terminal in the non-terrestrial network, as the satellite is needed for the communication, the communication delay is relatively large, so the related mechanism of the hybrid automatic repeat request may be implemented, and thus the hybrid automatic repeat request information is not sent, in this case, the first indication information may be set in an information field of the downlink control information used for indicating the hybrid automatic repeat request information, so as to make full use of the information field in the downlink control information.

It should be noted that the first indication information sent by the network device to the terminal is not limited to be carried in the downlink control information, and may also be carried in other downlink information, for example, it may also be carried in a high-level signaling or a media access control control element (MAC CE).

In an embodiment, sending the first indication information to the terminal in the implicit manner includes: determining a scrambling sequence and/or a radio network temporary identifier corresponding to the target polarization mode; and send a signaling to the terminal. The signaling is scrambled by the scrambling sequence and/or the radio network temporary identifier.

The network device may select the scrambling sequence corresponding to the target polarization mode to scramble the signaling sent to the terminal, or select the radio network temporary identifier (RNTI) corresponding to the target polarization mode to scramble the signaling sent to the terminal. The signaling may be a scheduling signaling, and for example may be scrambled on a cyclic redundancy check (CRC) of the scheduling information.

For example, the network device scrambles the signaling sent to the terminal through the scrambling sequence corresponding to the target polarization mode. After receiving the signaling, the terminal may descramble the signaling through at least one descrambling sequence. Each descrambling sequence corresponds to a polarization mode. When the signaling is descrambled successfully, a polarization mode corresponding to the descrambling sequence that successfully descrambles the signaling may be determined as the target polarization mode.

For example, the network device scrambles the signaling sent to the terminal through the radio network temporary identifier corresponding to the target polarization mode. After receiving the signaling, the terminal may descramble the signaling through at least one radio network temporary identifier. Each radio network temporary identifier corresponds to a polarization mode. When the signaling is descrambled successfully, a polarization mode corresponding to the radio network temporary identifier that successfully descrambles the signaling may be determined as the target polarization mode.

Therefore, the terminal may determine the target polarization mode without the need for the network device to directly send the first indication information to the terminal, which is beneficial to saving communication resources.

In an embodiment, the network device sends the first indication information to the terminal in the implicit manner, which may also mean that after the network device sends the first indication information once, the terminal subsequently also uses the target polarization mode indicated by the first indication information received this time to communicate with the satellite. For example, after the terminal receives the first indication information once, it needs to receive the first indication information again after the effective time period to re-determine the target polarization mode. However, if the terminal does not receive the first indication information again after the effective time period, it still can use the target polarization mode indicated by the last received first indication information to communicate with the satellite when it needs to communicate with the satellite.

In an embodiment, the network device sends the first indication information to the terminal in the implicit manner, which may also mean that the target polarization mode indicated by the network device via the first indication information corresponds to one of an uplink transmission and a downlink transmission, and when performing the other one of the uplink transmission and the downlink transmission, the terminal uses the target polarization mode indicated by the first indication information received this time or a polarization mode opposite to the target polarization mode to communicate with the satellite. For example, the first indication information indicates the terminal to use the target polarization mode to communicate with the satellite when performing the uplink transmission, then the terminal may also use the target polarization mode to communicate with the satellite when performing the downlink transmission.

Embodiments of the present disclosure provide a schematic flowchart of a polarization determining method. The method includes: determining the target polarization mode from polarization modes supported by the terminal.

In some possible implementations, the method may be implemented alone, or may be implemented cooperated with any other embodiment of the present disclosure, for example, may be implemented cooperated with the step 101.

In some possible implementations, as shown in FIG. 2, the method may include the following steps.

In step S201, capability information sent by the terminal is received, and polarization modes supported by the terminal are determined according to the capability information.

In step S202, the target polarization mode is determined from the polarization modes supported by the terminal.

In an embodiment, the terminal may report the capability information of the terminal to the network device, and inform the network device of the polarization modes supported by the terminal through the capability information, so that the network device may determine the target polarization mode from the polarization modes supported by the terminal. Accordingly, it can be ensured that the target polarization mode determined by the network equipment is a polarization mode supported by the terminal, and that the terminal can use the target polarization mode to communicate with the satellite.

FIG. 3 is a schematic flowchart illustrating a polarization indicating method according to embodiments of the present disclosure. As shown in FIG. 3, the method includes a following step.

In step S301, second indication information is sent to the satellite in the non-terrestrial network, and the second indication information is configured to indicate the satellite to communicate with the terminal using the target polarization mode.

In some possible implementations, the method may be implemented alone, or may be implemented cooperated with any other embodiment of the present disclosure, for example, may be implemented cooperated with the step 101 and/or steps 201-202.

In an embodiment, the satellite may also send the second indication information to the satellite, and indicate, via the second indication information, the satellite to communicate with the terminal using the target polarization mode.

It should be noted that the step S301 is executed only when the target polarization mode is independently determined by the base station. When the target polarization mode is independently determined by the satellite and informed to the base station, or the target polarization mode is negotiated by the satellite and the base station, since the satellite already knows the target polarization mode, the step S301 may not be performed to avoid wasting communication resources. Of course, if the satellite and the base station are the same device, the step S301 may not be performed.

FIG. 4 is a schematic flowchart illustrating a polarization determining method according to embodiments of the present disclosure. The polarization indicating method shown in embodiments of the present disclosure may be performed by a terminal, and the terminal is able to communicate with a base station in a non-terrestrial network, for example, via a satellite in the sky. The communication via a satellite includes but is not limited to a transparent transmission, a non-transparent transmission (also called on-board regeneration), and other manners.

In an embodiment, the terminal includes, but is not limited to, a communication apparatus such as a mobile phone, a tablet computer, a wearable device, a sensor, or an Internet of Things device. The base station includes, but is not limited to, a base station in a communication system, such as a 4G base station, a 5G base station, or a 6G base station. The base station may be a base station in a non-terrestrial network, and the terminal may be a terminal in a non-terrestrial network.

As shown in FIG. 4, the polarization determining method may include a following step.

In step S401, a target polarization mode for communication with a base station is determined according to first indication information sent by the base station.

In an embodiment, before determining the target polarization mode, the terminal may receive a downlink signal sent by the satellite in a certain way, so as to receive the first indication information. For example, the terminal may perform blind detection on the downlink signal sent by the satellite. Alternatively, the satellite uses a circular polarization mode to send downlink signals, then the terminal can receive a part of signals even if it uses a linear polarization mode that is used in a general communication process, but the reception effect is slightly poor, and the complete first indication information may be obtained through multiple receptions, even if it cannot be obtained through a single reception.

After the terminal determines the target polarization mode, it can communicate with the satellite through the target polarization mode. For example, it is determined according to the first indication information that the target polarization mode is a polarization mode of a downlink communication, then a downlink signal sent by the satellite through the target polarization mode may be received through the target polarization mode. For example, it is determined according to the first indication information that the target polarization mode is a polarization mode of an uplink communication, then an uplink signal may be sent to the satellite through the target polarization mode.

In an embodiment, the target polarization mode indicated by the network device to the terminal may also be a polarization mode used for a communication between the satellite and the terminal. For example, the network device determines a polarization mode used by a communication of the satellite as the target polarization mode. The target polarization mode may be specified in a protocol, or it is independently determined by the satellite and informed to the base station, or it is independently determined by the base station, or it is negotiated by the satellite and the base station. Of course, if the satellite and the base station are the same device (also known as the network device), the target polarization mode may be specified in a protocol, or may be determined by the network device.

For example, in a case where the target polarization mode is independently determined by the network device, the network device may determine the target polarization mode according to the influence of the ionosphere and/or the mist layer between the ground and the satellite on signal transmissions, so that the influence of the ionosphere and/or the mist layer on the signal transmissions may be reduced to the greatest extent when the satellite communicates based on the target polarization mode.

In an embodiment, after determining the target polarization mode, the network device may generate the first indication information for indicating the target polarization mode, and send the first indication information to the terminal, so that the terminal is able to determine the target polarization mode for communication with the satellite in the non-terrestrial network according to the first indication information, and use the target polarization mode to communicate with the satellite, thereby avoiding that the polarization mode used by the terminal for the communication with the satellite is different from that used by the satellite, and ensuring good communication between the terminal and the satellite.

In an embodiment, the first indication information may also carry timeliness information of the target polarization mode, and the timeliness information may be an actual time or a logical time, for example, the start and end include a system frame number, a time slot, a time-domain symbol, etc. The terminal may use the target polarization mode to communicate with the satellite within an effective time period corresponding to the timeliness information; after the effective time period corresponding to the timeliness information, the terminal may receive the first indication information sent by the network device again, or request the network device to send the first indication information again, and communicate with the satellite according to the target polarization mode indicated by the first indication information received again.

In an embodiment, the first indication information may also carry service information of the target polarization mode. The service information may include one or more service types. Alternatively, the service information does not include a specific service type, but indicates, by default, a service currently performed by the terminal. When performing information transmission of the service type corresponding to the service information, the terminal may use the target polarization mode to communicate with the satellite. When performing information transmission of other service types, the terminal may receive the first indication information sent by the network device again, or request the network device to send the first indication information again (information of the other service types may be carried in the request, so that the target polarization mode indicated by the network device corresponds to the other service types), and communicate with the satellite according to the target polarization mode indicated by the first indication information received again.

In an embodiment, the target polarization mode includes at least one of: a linear polarization, a circular polarization, a left-hand circular polarization, or a right-hand circular polarization.

In an embodiment, it is determined by the network device that the target polarization mode indicated by the satellite via the first indication information may include an uplink target polarization mode for an uplink transmission and a downlink target polarization mode for a downlink transmission. The uplink target polarization mode may be the same as or different from the downlink target polarization mode. The terminal may use the uplink target polarization mode for the uplink transmission, and use the downlink target polarization mode to receive a downlink signal. For example, the uplink target polarization mode is the left-hand circular polarization, and the downlink target polarization mode is the right-hand circular polarization, so the terminal may use the left-hand circular polarization mode to send information to the satellite, and use the right-hand circular polarization mode to receive information sent by the satellite.

In an embodiment, determining the target polarization mode for communication with the network device according to the first indication information sent by the network device includes: receiving downlink control information sent by the network device; and acquiring the first indication information from the downlink control information.

The network device may send the downlink control information to the terminal, and carry the first indication information in the downlink control information. In this way, there is no need to send the first indication information separately, which is conducive to saving communication resources.

In an embodiment, acquiring the first indication information from the downlink control information includes: acquiring the first indication information from an information field newly added in the downlink control information dedicated to indicating the target polarization mode; or acquiring the first indication information from an existing information field of the downlink control information for indicating other information. The other information is not sent at least during a part of a communication process between the base station and the terminal.

The network device may add an information field in the downlink control information, and the information field is dedicated to indicating the target polarization mode, and the first indication information may be set in this information field.

The network device may also set the first indication information in an existing information field of the downlink control information, and the existing information field is used to indicate other information, but the other information is not sent at least during a part of the communication process between the network device and the terminal. In this way, the influence of setting the first indication information in the existing information field on the other information may be minimized.

For example, the other information may be hybrid automatic repeat request information or transport block scheduling information. Taking the hybrid automatic repeat request information as an example for illustration, when the network device communicates with the terminal in the non-terrestrial network, as the satellite is needed for the communication, the communication delay is relatively large, so the related mechanism of the hybrid automatic repeat request may be implemented, and thus the hybrid automatic repeat request information is not sent, in this case, the first indication information may be set in an information field of the downlink control information used for indicating the hybrid automatic repeat request information, so as to make full use of the information field in the downlink control information.

It should be noted that the first indication information sent by the network device to the terminal is not limited to be carried in the downlink control information, and may also be carried in other downlink information, for example, it may also be carried in a high-level signaling or a media access control control element.

In an embodiment, determining the target polarization mode for communication with the network device according to the first indication information sent by the network device includes: descrambling a signaling sent by the network device by using a descrambling sequence and/or a radio network temporary identifier; determining a polarization mode corresponding to the descrambling sequence and/or the radio network temporary identifier that successfully descrambles the signaling as the target polarization mode.

The network device may select a scrambling sequence corresponding to the target polarization mode to scramble the signaling sent to the terminal, or select the radio network temporary identifier corresponding to the target polarization mode to scramble the signaling sent to the terminal. The signaling may be a scheduling signaling, and for example may be scrambled on a CRC of the scheduling information.

For example, the network device scrambles the signaling sent to the terminal through the scrambling sequence corresponding to the target polarization mode. After receiving the signaling, the terminal may descramble the signaling through at least one descrambling sequence. Each descrambling sequence corresponds to a polarization mode. When the signaling is descrambled successfully, a polarization mode corresponding to the descrambling sequence that successfully descrambles the signaling may be determined as the target polarization mode.

For example, the network device scrambles the signaling sent to the terminal through the radio network temporary identifier corresponding to the target polarization mode. After receiving the signaling, the terminal may descramble the signaling through at least one radio network temporary identifier. Each radio network temporary identifier corresponds to a polarization mode. When the signaling is descrambled successfully, a polarization mode corresponding to the radio network temporary identifier that successfully descrambles the signaling may be determined as the target polarization mode.

Therefore, the terminal may determine the target polarization mode without the need for the network device to directly send the first indication information to the terminal, which is beneficial to saving communication resources.

In an embodiment, the method further includes: continuing to communicate with the network device through the target polarization mode, in response to not receiving other indication information for indicating a polarization mode sent by the network device within a preset time period after receiving the first indication information.

After the terminal receives the first indication information once, it needs to receive the first indication information again within the preset time period to re-determine the target polarization mode. However, if the terminal does not receive the first indication information again after the effective time period, it still can use the target polarization mode indicated by the last received first indication information to communicate with the satellite when it needs to communicate with the satellite.

In an embodiment, determining the target polarization mode for communication with the network device according to the first indication information sent by the network device includes:
determining an uplink polarization mode for an uplink transmission to a satellite according to the first indication information sent by the network device; and determining a downlink polarization mode for receiving a downlink transmission from the satellite according to a first association relationship between polarization modes corresponding to the uplink transmission and the downlink transmission, or
determining the downlink polarization mode for receiving the downlink transmission from the satellite according to the first indication information sent by the network device; and determining the uplink polarization mode for the uplink transmission to the satellite according to a second association relationship between polarization modes corresponding to the uplink transmission and the downlink transmission.

The target polarization mode indicated by the network device via the first indication information may correspond to one of the uplink transmission and the downlink transmission, and when performing the other one of the uplink transmission and the downlink transmission, the terminal may determine the polarization mode required by the other one of the uplink transmission and the downlink transmission according to an association relationship between the polarization modes corresponding to the uplink transmission and the downlink transmission.

For example, if the first association relationship is a same relationship, the terminal may adopt the uplink polarization mode as the downlink polarization mode. For example, if the first association relationship is an opposite relationship, the terminal may adopt an opposite mode to the uplink polarization mode as the downlink polarization mode. The opposite mode means that the linear polarization is opposite to the circular polarization, and the left-hand circular polarization is opposite to the right-hand circular polarization. For example, when the first association relationship is the opposite relationship, if the uplink polarization mode is the linear polarization, the terminal may adopt the circular polarization (either left-handed or right-handed) as the downlink polarization mode.

Correspondingly, for example, if the second association relationship is a same relationship, the terminal may adopt the downlink polarization mode as the uplink polarization mode. For example, if the second association relationship is an opposite relationship, the terminal may adopt an opposite mode to the downlink polarization mode as the uplink polarization mode.

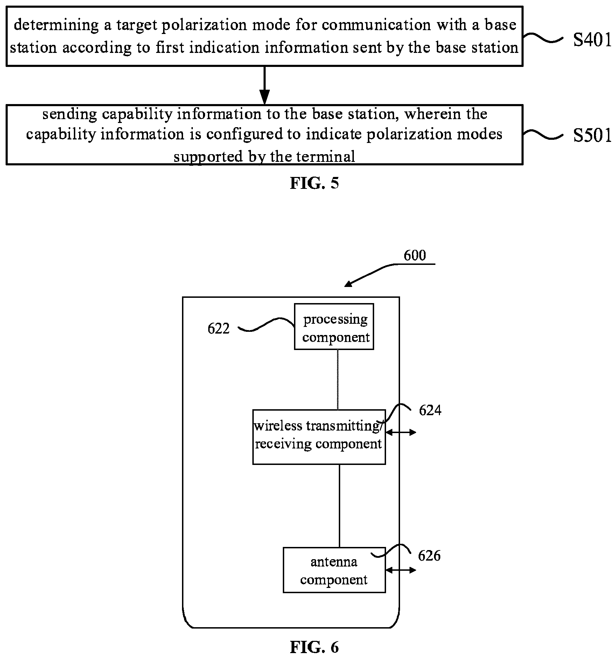

FIG. 5 is a schematic flowchart illustrating another polarization determining method according to embodiments of the present disclosure. As shown in FIG. 5, the method further includes a following step.

In step 501, capability information is sent to the network device, and the network device is able to determine polarization modes supported by the terminal according to the capability information, or the capability information is configured to directly indicate the polarization modes supported by the terminal.

In an embodiment, the terminal may report the capability information of the terminal to the network device, and inform the network device of the polarization modes supported by the terminal through the capability information, so that the network device may determine the target polarization mode from the polarization modes supported by the terminal. Accordingly, it can be ensured that the target polarization mode determined by the network equipment is a polarization mode supported by the terminal, and that the terminal can use the target polarization mode to communicate with the satellite.

Corresponding to the foregoing embodiments of the polarization indicating method and the polarization determining method, the present disclosure also provides embodiments of a polarization indicating apparatus and a polarization determining apparatus.

Embodiments of the present disclosure also provide a polarization indicating apparatus, which is applicable to a base station, and the base station is able to communicate with a terminal in a non-terrestrial network, for example, via a satellite in the sky. The communication via a satellite includes but is not limited to a transparent transmission, a non-transparent transmission (also called on-board regeneration), and other manners. In the non-transparent transmission mode, the satellite and the base station may be the same device, and the polarization indicating apparatus is applicable to the device.

In an embodiment, the terminal includes, but is not limited to, a communication apparatus such as a mobile phone, a tablet computer, a wearable device, a sensor, or an Internet of Things device. The base station includes, but is not limited to, a base station in a communication system, such as a 4G base station, a 5G base station, or a 6G base station. The base station may be a base station in a non-terrestrial network, and the terminal may be a terminal in a non-terrestrial network.

In an embodiment, the polarization indicating apparatus includes: one or more processors configured to send first indication information to a terminal. The first indication information is configured to indicate a target polarization mode for the terminal to communicate with a satellite in a non-terrestrial network.

In an embodiment, the processor is configured to send the first indication information to the terminal in an explicit manner and/or an implicit manner.

In an embodiment, the processor is configured to send downlink control information to the terminal. The first indication information is carried in the downlink control information.

In an embodiment, the first indication information is contained in an information field newly added in the downlink control information dedicated to indicating the target polarization mode, or is contained in an existing information field of the downlink control information for indicating other information. The other information is not sent at least during a part of a communication process between the base station and the terminal.

In an embodiment, the processor is configured to determine a scrambling sequence and/or a radio network temporary identifier corresponding to the target polarization mode; and send a signaling to the terminal. The signaling is scrambled by the scrambling sequence and/or the radio network temporary identifier.

In an embodiment, the processor is further configured to receive capability information sent by the terminal, determine polarization modes supported by the terminal according to the capability information; and determine the target polarization mode from the polarization modes supported by the terminal.

In an embodiment, the base station is a base station in the non-terrestrial network, and the terminal is a terminal in the non-terrestrial network.

In an embodiment, the processor is further configured to send second indication information to the satellite in the non-terrestrial network. The second indication information is configured to indicate the satellite to communicate with the terminal using the target polarization mode.

In an embodiment, the target polarization mode includes at least one of: a linear polarization, a circular polarization, a left-hand circular polarization, or a right-hand circular polarization.

Embodiments of the present disclosure also provide a polarization determining apparatus, which is applicable to a terminal, and the terminal is able to communicate with a base station in a non-terrestrial network, for example, via a satellite in the sky. The communication via a satellite includes but is not limited to a transparent transmission, a non-transparent transmission (also called on-board regeneration), and other manners.

In an embodiment, the terminal includes, but is not limited to, a communication apparatus such as a mobile phone, a tablet computer, a wearable device, a sensor, or an Internet of Things device. The base station includes, but is not limited to, a base station in a communication system, such as a 4G base station, a 5G base station, or a 6G base station. The base station may be a base station in a non-terrestrial network, and the terminal may be a terminal in a non-terrestrial network.

In an embodiment, the polarization determining apparatus includes: one or more processors configured to determine a target polarization mode for communication with a base station according to first indication information sent by the base station.

In an embodiment, the processor is configured to receive downlink control information sent by the base station; and acquire the first indication information from the downlink control information.

In an embodiment, the processor is configured to: acquire the first indication information from an information field newly added in the downlink control information dedicated to indicating the target polarization mode; or acquire the first indication information from an existing information field of the downlink control information for indicating other information. The other information is not sent at least during a part of a communication process between the base station and the terminal.

In an embodiment, the processor is configured to: descramble a signaling sent by the base station by using a descrambling sequence and/or a radio network temporary identifier; and determine a polarization mode corresponding to the descrambling sequence and/or the radio network temporary identifier that successfully descrambles the signaling as the target polarization mode.

In an embodiment, the processor is further configured to continue to communicate with the base station through the target polarization mode, in response to not receiving other indication information for indicating a polarization mode from sent by the base station within a preset time period after receiving the first indication information.

In an embodiment, the processor is configured to: determine an uplink polarization mode for an uplink transmission to a satellite according to the first indication information sent by the base station; and determine a downlink polarization mode for receiving a downlink transmission from the satellite according to a first association relationship between polarization modes corresponding to the uplink transmission and the downlink transmission, or determine the downlink polarization mode for receiving the downlink transmission from the satellite according to the first indication information sent by the base station; and determine the uplink polarization mode for the uplink transmission to the satellite according to a second association relationship between polarization modes corresponding to the downlink transmission and the downlink transmission.

In an embodiment, the processor is further configured to send capability information to the base station. The capability information is configured to indicate polarization modes supported by the terminal.

In an embodiment, the base station is a base station in a non-terrestrial network, and the terminal is a terminal in the non-terrestrial network.

In an embodiment, the target polarization mode includes at least one of: a linear polarization, a circular polarization, a left-hand circular polarization, or a right-hand circular polarization.

With respect to the apparatus in the above embodiments, the specific manners of individual modules for performing operations have been described in detail in the embodiments of the related methods, which will not be elaborated herein.

Since the apparatus embodiments substantially correspond to the method embodiments, for relevant parts, reference may be made to the descriptions of the method embodiments. The above-described apparatus embodiments are merely illustrative, in which modules described as separate components may be or may not be physically separated, and components displayed as modules may be or may not be physical modules, that is, either located at one place or distributed onto a plurality of network modules. The objects of embodiments of the present disclosure may be achieved by some or all of the modules in accordance with practical requirements. It would be appreciated and implemented by those skilled in the art without creative labors.

Embodiments of the present disclosure further provided a communication apparatus, which includes: a processor; and a memory for storing a computer program. When the computer program is executed by the processor, the polarization indicating method as described in any of the above embodiments is implemented.

Embodiments of the present disclosure further provided a communication apparatus, which includes: a processor; and a memory for storing a computer program. When the computer program is executed by the processor, the polarization determining method as described in any of the above embodiments is implemented.

Embodiments of the present disclosure further provided a computer-readable storage medium having stored therein a computer program that, when executed by a processor, causes steps in the polarization indicating method as described in any of the above embodiments to be implemented.

Embodiments of the present disclosure further provided a computer-readable storage medium having stored therein a computer program that, when executed by a processor, causes steps in the polarization determining method as described in any of the above embodiments to be implemented.

FIG. 6 is a schematic block diagram illustrating an apparatus 600 for polarization indication according to embodiments of the present disclosure. As shown in FIG. 6, the apparatus 600 may be provided as a base station. Referring to FIG. 6, the apparatus 600 includes a processing component 622, a wireless transmitting/receiving component 624, an antenna component 626, and a signal processing part specific to a wireless interface. The processing component 622 may further include one or more processors. One processor in the processing component 622 may be configured to implement the polarization indicating method as described in any of the foregoing embodiments.

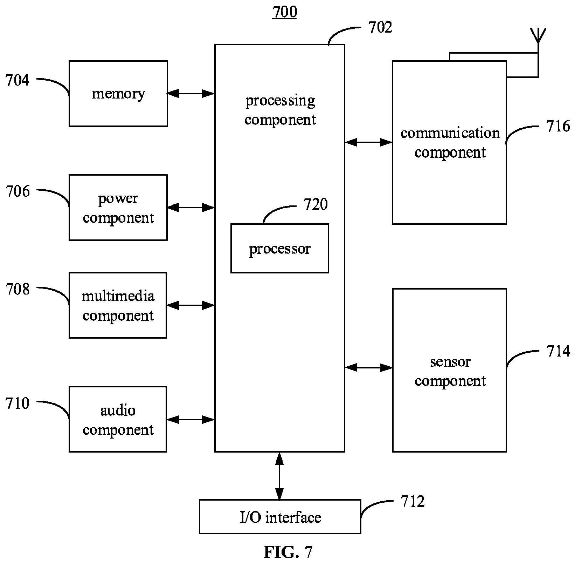

FIG. 7 is a schematic block diagram illustrating an apparatus 700 for polarization determination according to embodiments of the present disclosure. For example, the apparatus 700 may be a mobile phone, a computer, a digital broadcast terminal, a messaging device, a game console, a tablet device, a medical device, a fitness device, a personal digital assistant, or the like.

Referring to FIG. 7, the apparatus 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the apparatus 700, such as the operations associated with display, phone calls, data communications, camera operations, and recording operations. The processing component 702 can include one or more processors 720 to execute instructions to perform all or some of the steps in the above-described polarization determining method. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the apparatus 700. Examples of such data include instructions for any applications or methods operated on the apparatus 700, contact data, phonebook data, messages, pictures, videos, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the apparatus 700. The power component 706 may include a power management system, one or more power sources, and any other components associated with the generation, management, and distribution of power in the apparatus 700.

The multimedia component 708 includes a screen providing an output interface between the apparatus 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and/or the rear camera may receive an external multimedia datum while the apparatus 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone (MIC) configured to receive an external audio signal when the apparatus 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as keyboards, click wheels, buttons, and the like. The buttons may include, but are not limited to, a home button, a volume button, a starting button, and a locking button.

The sensor component 714 includes one or more sensors to provide status assessments of various aspects of the apparatus 700. For instance, the sensor component 714 may detect an open/closed status of the apparatus 700, relative positioning of components, e.g., the display and the keypad, of the apparatus 700, a change in position of the apparatus 700 or a component of the apparatus 700, a presence or absence of user contact with the apparatus 700, an orientation or an acceleration/deceleration of the apparatus 700, and a change in temperature of the apparatus 700. The sensor component 714 may include a proximity sensor configured to detect the presence of nearby objects without any physical contact. The sensor component 714 may further include a light sensor, such as a CMOS or CCD image sensor, for use in imaging applications. In some embodiments, the sensor component 714 may further include an accelerometer sensor, a gyroscope sensor, a magnetic sensor, a pressure sensor, or a temperature sensor.

The communication component 716 is configured to facilitate communication, wired or wireless, between the apparatus 700 and other devices. The apparatus 700 can access a wireless network based on a communication standard, such as Wi-Fi, 2G, 3G, 4G LTE, 5G NR or a combination thereof. In an illustrative embodiment, the communication component 716 receives a broadcast signal or broadcast associated information from an external broadcast management system via a broadcast channel. In an illustrative embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the apparatus 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing steps of the polarization determining method described above.

In an illustrative embodiment, there is also provided a non-transitory computer readable storage medium including instructions, such as included in the memory 704, executable by the processor 720 in the apparatus 700, for completing the above-mentioned polarization determining method. For example, the non-transitory computer-readable storage medium may be a ROM, a random access memory (RAM), a CD-ROM, a magnetic tape, a floppy disc, an optical data storage device, and the like.

Other embodiments of the present disclosure will be apparent to those skilled in the art from consideration of the specification and practice of the disclosure disclosed here. The present disclosure is intended to cover any variations, uses, or adaptations of the disclosure following the general principles thereof and including such departures from the present disclosure as come within known or customary practice in the art. It is intended that the specification and examples be considered as illustrative only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

It is to be noted that in this context, relational terms such as first and second are used solely to distinguish one entity or operation from another entity or operation, it does not necessarily require or imply any such actual relationship or sequence between these entities or operations. The term "include", "comprise" or any other variation thereof is intended to cover a non-exclusive inclusion, so that a process, method, article or device that includes a series of elements does not only include those elements, but also includes other elements that are not explicitly listed, or also includes elements inherent in such a process, method, article or device. Without further restrictions, an element defined by the statement "including a..." does not exclude the existence of another identical element in the process, method, article or device that includes the element.

The methods and apparatuses provided by embodiments of the present disclosure have been described in detail above, and specific examples are used to illustrate the principle and implementation of the present disclosure. The descriptions of the above embodiments are only used to help understand the methods and core ideas of the present disclosure. At the same time, for those skilled in the art, there will be some changes in the specific implementation and application scope according to the idea of the present disclosure. In summary, the content of the specification should not be construed as a limitation on the present disclosure.

## Claims

1. A polarization indicating method, performed by a base station, and comprising:
sending first indication information to a terminal, wherein the first indication information is configured to indicate a target polarization mode for the terminal to communicate with a satellite in a non-terrestrial network.

2. The method according to claim 1, wherein sending the first indication information to the terminal comprises:
sending the first indication information to the terminal in an explicit manner and/or an implicit manner.

3. The method according to claim 2, wherein sending the first indication information to the terminal in the explicit manner comprises:
sending downlink control information to the terminal, wherein the first indication information is carried in the downlink control information.

4. The method according to claim 3, wherein the first indication information is contained in an information field newly added in the downlink control information dedicated to indicating the target polarization mode, or is contained in an existing information field of the downlink control information for indicating other information, wherein the other information is not sent at least during a part of a communication process between the base station and the terminal.

5. The method according to claim 2, wherein sending the first indication information to the terminal in the implicit manner comprises:
determining a scrambling sequence and/or a radio network temporary identifier corresponding to the target polarization mode; and
sending a signaling to the terminal, wherein the signaling is scrambled by the scrambling sequence and/or the radio network temporary identifier.

6. The method according to any one of claims 1 to 5, further comprising:
receiving capability information sent by the terminal, and determining polarization modes supported by the terminal according to the capability information; and
determining the target polarization mode from the polarization modes supported by the terminal.

7. The method according to any one of claims 1 to 5, wherein the base station is a base station in the non-terrestrial network, and the terminal is a terminal in the non-terrestrial network.

8. The method according to claim 7, further comprising:
sending second indication information to the satellite in the non-terrestrial network, wherein the second indication information is configured to indicate the satellite to communicate with the terminal using the target polarization mode.

9. The method according to any one of claims 1 to 5, wherein the target polarization mode comprises at least one of: a linear polarization, a circular polarization, a left-hand circular polarization, or a right-hand circular polarization.

10. A polarization determining method, performed by a terminal, and comprising:
determining a target polarization mode for communication with a base station according to first indication information sent by the base station.

11. The method according to claim 10, wherein determining the target polarization mode for communication with the base station according to the first indication information sent by the base station comprises:
receiving downlink control information sent by the base station; and
acquiring the first indication information from the downlink control information.

12. The method according to claim 11, wherein acquiring the first indication information from the downlink control information comprises:
acquiring the first indication information from an information field newly added in the downlink control information dedicated to indicating the target polarization mode; or
acquiring the first indication information from an existing information field of the downlink control information for indicating other information, wherein the other information is not sent at least during a part of a communication process between the base station and the terminal.

13. The method according to claim 10, wherein determining the target polarization mode for communication with the base station according to the first indication information sent by the base station comprises:
descrambling a signaling sent by the base station by using a descrambling sequence and/or a radio network temporary identifier;
determining a polarization mode corresponding to the descrambling sequence and/or the radio network temporary identifier that successfully descrambles the signaling as the target polarization mode.

14. The method according to claim 10, further comprising:
continuing to communicate with the base station through the target polarization mode, in response to not receiving other indication information for indicating a polarization mode sent by the base station within a preset time period after receiving the first indication information.

15. The method according to claim 10, wherein determining the target polarization mode for communication with the base station according to the first indication information sent by the base station comprises:
determining an uplink polarization mode for an uplink transmission to a satellite according to the first indication information sent by the base station; and determining a downlink polarization mode for receiving a downlink transmission from the satellite according to a first association relationship between polarization modes corresponding to the uplink transmission and the downlink transmission,
or
determining the downlink polarization mode for receiving the downlink transmission from the satellite according to the first indication information sent by the base station; and determining the uplink polarization mode for the uplink transmission to the satellite according to a second association relationship between polarization modes corresponding to the downlink transmission and the downlink transmission.

16. The method according to any one of claims 10 to 15, further comprising:
sending capability information to the base station, wherein the capability information is configured to indicate polarization modes supported by the terminal.

17. The method according to any one of claims 10 to 15, wherein the base station is a base station in a non-terrestrial network, and the terminal is a terminal in the non-terrestrial network.

18. The method according to any one of claims 10 to 15, wherein the target polarization mode comprises at least one of: a linear polarization, a circular polarization, a left-hand circular polarization, or a right-hand circular polarization.

19. A polarization indicating apparatus, applicable to a base station, and comprising:
one or more processors, configured to send first indication information to a terminal,
wherein the first indication information is configured to indicate a target polarization mode for the terminal to communicate with a satellite in a non-terrestrial network.

20. A polarization determining apparatus, applicable to a terminal, and comprising:
one or more processors, configured to determine a target polarization mode for communication with a base station according to first indication information sent by the base station.

21. A communication apparatus, comprising:
a processor; and
a memory for storing a computer program;
wherein when the computer program is executed by the processor, the polarization indicating method according to any one of claims 1 to 9 is implemented.

22. A communication apparatus, comprising:
a processor; and
a memory for storing a computer program;
wherein when the computer program is executed by the processor, the polarization determining method according to any one of claims 1 to 18 is implemented.

23. A computer-readable storage medium having stored therein a computer program that, when executed by a processor, causes steps in the polarization indicating method according to any one of claims 1 to 9 to be implemented.

24. A computer-readable storage medium having stored therein a computer program that, when executed by a processor, causes steps in the polarization determining method according to any one of claims 10 to 18 to be implemented.
